# EUROPEAN PATENT APPLICATION

(11) **EP 1 793 239 A1**
(43) Date of publication of application: **06.06.2007**
(21) Application number: 06115632.9
(22) Date of filing: 19.06.2006
(51) Int. Cl.: G01S 5/14

(54) **Field device management**

(30) Priority: 30.11.2005 US 291024
(71) Applicant: Leica Geosystems AG, 9435 Heerbrugg (CH)
(72) Inventor: Sun, Hao, Simi Valley, CA 93065 (US)
(74) Representative: Büchel, Kaminski & Partner

(57) **Abstract**

Field device management includes receiving data from a field device. The data describes current settings by which the field device is collecting geographic data. The geographic data includes geodetic data recorded from a GPS or DGPS system within the field device. Configuration instructions can be transmitted to the field device to reconfigure the manner in which the field device collects data. The data stored at the field device can also be synchronized with data acquired by other field devices and data stored at a field device management computer.

## Description

Collection of data describing geography began by traveling into the field, making observations and measurements, and creating paper maps from these observations and measurements. Field edits were performed by creating sketches, notes, and additional measurements. These field edits were then deciphered and manually entered into written records. The result of these conventional methods of acquiring geographic data was that the geographic data was often not as up-to-date or accurate as it could have been. Moreover, these conventional processes of data collection and editing were time consuming and error prone.

An increasingly important source of data input for constructing geographic databases is data received from handheld field devices. The use of geographic data, such as geodetic data, taken by handheld GPS devices has become an even more valuable tool as the devices become more affordable, accurate, and prevalent. Modern field devices allow for the development of highly accurate geographic models. By taking multiple readings, for example, one can describe the area and perimeter of area objects, such as vegetation or urban boundaries for example. This is especially beneficial as an input solution to geographic information systems (GIS)s in areas that are not well surveyed, or for field checking satellite imagery for environmental surveys.

Conventional field software, such as Penmap, allowed for the simultaneous input of GPS information with field notes in a system described as a "surveyor's notebook." Field devices using conventional field software enable the addition of real-time information to such databases and applications. Field device software can also speed up analysis, display, and decision making by using up-to-date and more accurate spatial data. Field units running such software can be used for field mapping by allowing a user to create, edit, and utilize maps while in the field making observations and collecting real-time measurements. Thus, field devices have taken conventional GIS into the field for data collection and analysis.

While conventional field devices offer several advantages for collection of geographic data, conventional field devices have not been able to communicate real-time data and settings in order to control, troubleshoot, and update the collection of data by the field devices from a remote location. As a result, the field devices have been much more isolated from control and collaboration of the data collected. Thus, there is still a need for improved management of the field device units.

A system for collecting geographic data is disclosed. The system can include a field device manager. The field device manager can include a management network interface and a management data processing device configured to transmit a configuration instruction to the network interface. The system can further include a network and a field device. The field device can include a global positioning device for collecting geographical data related to a geographic location. The field device can further include a field network interface for receiving the configuration instruction from the network. The field device can further include a field data processor configured to change a configuration setting for the collection of geographical data based on the configuration instruction received.

A method for remotely configuring a field device is disclosed. The method can include receiving data from the field device describing current settings by which the field device is collecting geographic data. The method can further include transmitting configuration instructions to the field device to reconfigure the manner in which the field device collects data the method can further include synchronizing the data stored at the field device by transmitting geographic data to the field device that was collected by a different field device.

A method of communication between a field device and a field device manager is disclosed. The method can include transmitting information to a network, the information describing a current configuration setting that defines a setting by which the field device collects data. The method can further include receiving instructions from the network describing a change to the configuration setting. The method can further include changing the current configuration setting of the field device.

These and other aspects of the present invention will become more fully apparent from the following description and appended claims

To further clarify aspects of several embodiments, a more particular description will be rendered by reference to specific embodiments thereof which are illustrated in the appended drawings. It is appreciated that these drawings depict only example embodiments and are therefore not to be considered limiting of its scope. The embodiments will be described and explained with additional specificity and detail through the use of the accompanying drawings in which:

Figure 1 illustrates a method for controlling configuration settings of a field device;

Figure 2, illustrates a method of communication between a field device and a field device manager;

Figure 3 is a block diagram illustrating a system for field device management;

Figure 4 illustrates a more particular example of a system for managing a field device;

Figure 5 illustrates an example of a field device management operating environment;

Figure 6 illustrates an example of a field device; and

Figure 7 illustrates various subsystems of a GIS according to an example embodiment.

Several embodiments relate to portable data collection. Several embodiments also relate to centralized management of data collection by portable devices. The principles of these embodiments are described with reference to the attached drawings to illustrate the structure and operation of the embodiments. It should be understood that the drawings are diagrammatic and schematic representations of such example embodiments and, accordingly, are not limiting of the scope of the embodiments, nor are the drawings necessarily drawn to scale.

Field devices collect data in the field describing geography. According to several embodiments, a field device management computer can communicate with a field device via a network to receive data acquired by the device and to control the configuration of the field device. The management computer can monitor and troubleshoot the data collection process performed by the field device. The management computer can also synchronize data collected and stored by multiple field devices by distributing data collected by one field device to the rest of the field devices. Thus, information, notes, instructions, settings, and collected geographic data can be received by the field device management computer and analyzed by a field device manager to improve the acquisition of geographical data by the field devices.

### 1. Management of Field Device Configuration Settings

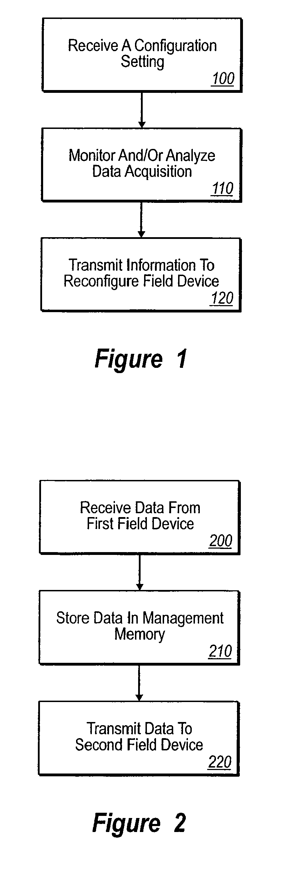

Data collection configuration settings of a field device, or multiple field devices, can be controlled by the field device manager. An example method for managing the configuration settings of a field device is illustrated in Figure 1. A data collection configuration setting of the field device can be received (100). The configuration setting describes current settings which guide and control the field device in the collection of geographic data. For example, the configuration setting can be a setting for acquisition of geographic data using a GPS or differential GPS (DGPS) such as minimum GPS satellites, beacon settings, and precision settings for example.

The configuration setting can be monitored and/or analyzed, along with error logs or other information, such as aspect of the collection of data by the field device, to determine if the configuration settings should be changed (110). In the instance that it is determined that the configuration settings should be changed based on an analysis of the error logs and other information, new configuration settings can be transmitted to the field device to reconfigure the manner in which the field device collects geographic data (120). This reconfiguration can also be based on coordination of data collection by multiple field devices.

Device management, such as the method illustrated in Figure 1, can be accomplished by window-based management software that provides data synchronization and system management of multiple field devices through either a locally connected cradle, or through remotely connected wireless communication, such as WiFi or General Packet Radio Service (GPRS) communication. Through these communication links, data can be sent to the field devices from the field device manager. Changes made on the field devices, and data collected by each field device, can be sent back to the field device manager via these wireless communication links. The data received by the field device manager can be analyzed to determine if further changes are required to the configuration settings of the field devices.

Other data, such as acquired geographic data and error logs, can also be received by the field device management computer from the field devices. The configuration settings and other data received can be analyzed by the field device manager and the field device manager can determine the cause of errors in data acquisition and optimize the acquisition of data by the field device. Based on a result of the analysis data acquisition by multiple field devices can also be coordinated. The analysis, can be conducted by a field device manager using the field device management computer using software to help analyze the configuration settings and data received. The configuration and settings received can be presented for review to the field device manager using a display. Results of analysis and changes to configuration settings of the field device can be input to the management computer by the field device manager using a user interface, such as a keyboard and mouse. The changes to the configuration settings can be discovered and suggested to the field device manager by software for approval by the manager. Information describing a result of the analysis, such as describing changes to configuration settings of the field device, can be transmitted to the field device.

For example, a management software embodiment includes a System Management module, which is responsible for managing the hardware and device configurations and settings of the field devices, such as GPS and DGPS settings. The System Management module can also manage software installation information, such as version and application size. The management software can retrieve error log information from each field device. Error logs can also include information such as software crash, critical error messages from the engine, memory usage, etc, which may be vital for error analysis in the office. This configuration, error, and installation information can be used to reconfigure, control, optimize, and troubleshoot the collection of geographic data by the field devices.

A user of the management software (such as a manager, supervisor, or expert) can reconfigure one, or many, handheld field devices according to the work that a field device user will do with the handheld. For example, the manager in the office can reconfigure GPS and DGPS configurations, such as minimum satellites, Max Accuracy, Max Track, and Hyper Track modes. Max Track and Hyper Track allow for signals to be tracked at a lower strength threshold, which provides for better reception of GPS signals in dense foliage. The minimum satellite control allows the field device manager to define how many satellites must be tracked to calculate a position, a default setting of four satellites is typically necessary to calculate a three dimensional position. The field device manager can also configure the field device for a particular antenna type. Because external antennas can be connected, the manager can define the parameters for the particular external antenna used by the field device. The manager can also configure several controls of the field device, such as post processing where the data acquired is processed by the field device, static and moving observations by the field device, as well as set the positional update rate interval at which the field device receiver acquires data. Time, data transfer, and almanac data can also be controlled by the field device manager. Almanac data includes information transmitted by each satellite on the orbit and state of every satellite in the GPS constellation. Almanac data allows the GPS receiver to rapidly acquire satellite signals. The field device manager can also reconfigure real-time-device aspects such as Satellite Based Augmentation System (SBAS) and beacon aspect settings. The field device manager can configure software versions, as previously mentioned, and can apply a lock at the field device to prevent any of the configurations of the field device from being changed by a field device user.

The field device manager can use device management software as a diagnostic tool to identify data collection errors, such as data logging errors. For example, if the handheld is not collecting geographic reference points, the problem could be that point quality is set too high. In this instance, the field device manager can determine whether point quality is too high by looking at the point quality settings for the particular handheld. Thus, the field manager can control any settings by which the field devices receive data from other devices, such as antennas, offset devices, wireless devices, and satellites.

A wizard can be used at either the field device manager and/or the field device to configure the field device. The wizard can receive inputs from the field device user and/or the manager and provide suggestions for reconfiguring the field device. The wizard can also collect the geographic data in such a way that the data can be processed more efficiently in programs such as SKI PRO or GIS Data PRO. This creates a simplified process for the user both in the field and in the office.

### 2. Synchronizing Data

Data collected by each of the field devices can be transmitted to the field device management computer and the field device management computer can store the data in a management database. The field device management computer can also transmit the data to each of the other field devices such that every field device, and the device manager, has a current and up-to-date database with all of the data acquired by every field device. As a result, as data is acquired by each of the field devices, the acquired data will be transmitted to the device manager, the device manager will distribute the data acquired to each of the other field devices, such that the data stored by each of the field devices will be synchronized with the data stored by the device manager.

For example, referring to Figure 2, an example method of communication between a field device and a management computer is illustrated. The management computer can receive geographic data collected by a first field device (200). This geographic data can include GPS data, DGPS data, image data, observations, voice recordings, etc. The management computer can store the data received from the field device in a management memory (210). The management computer can also transmit the data received to a second field device coupled to the management computer (220). The second field device receiving the geographic data can store the geographic data in a second field device memory thereby synchronizing the field device memory with the management memory. Thus, as the field devices collect geographic data and transmit the data to the management computer, the management computer transmits the data to the other field devices. In this manner, the management computer and the field devices each have a comprehensive, and current, local database of acquired geographic data. This is referred to as synchronization of data between the field devices and the management computer. The management database can also include data tracking where a historical log of data acquisition by each field device is stored. Functions of system management that are coordinated by the manager can also be stored in the management database and can include device configuration and software configuration of the field devices.

A Data and File Sync module of the management software can provide data and file synchronization between the management database and either locally or remotely connected field devices. The data transferred to the field devices can be based solely on a differencing of the content of the field databases and the management database content. Thus only the difference between the data stored by the field databases and the content of the management database need be downloaded as opposed to the entire management database. In the instance that a field device does not have any of the geographic data in the management database, the differencing would be the entire management database. The management database can also be updated with additional data such as field device ID, time tag, and data transfer status.

The management software can operate in conjunction with a wireless or wired connection. Examples of wireless connections include Wi-Fi, cellular, RF, Bluetooth, or other wireless communication means, which can facilitate connection to the Internet. The field devices can include, for example, a GPS receiver with a map-display capability. Managing the field device can involve a combination of both data synchronization and configuration, as mentioned above.

### 3. Example embodiments

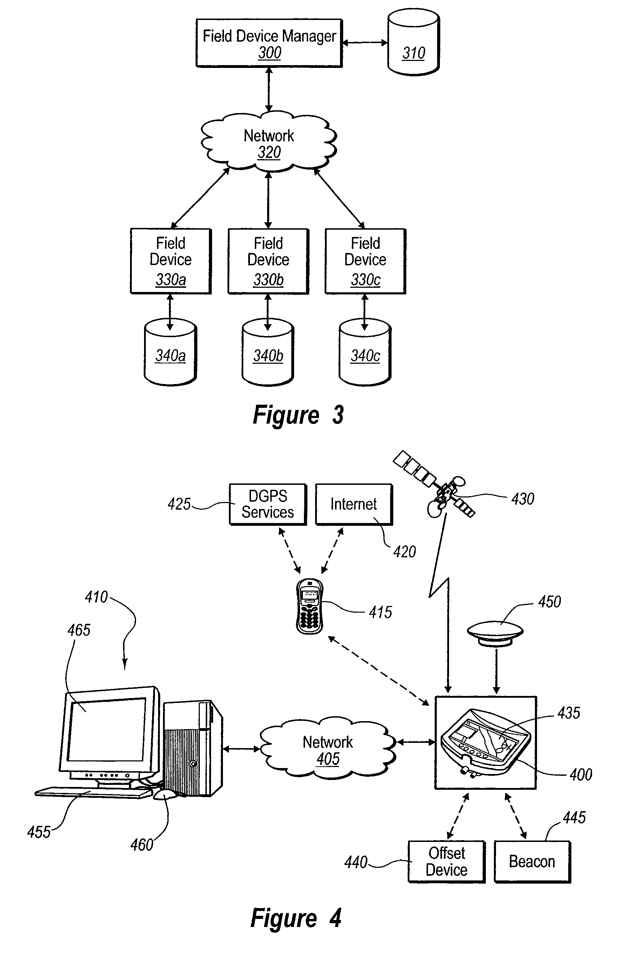

Referring to Figure 3, a block diagram illustrating a system for field device management is shown. The system can include a field device manager 300 coupled to a network 320 for communication of data and instructions to several field devices 330. The field device manager 300 can be coupled to a management database 310 for storage of data acquired by the field devices 330. The data stored in the management database 310 can be accessed and communicated to the field devices 330 via the network 320. The management database 310 can also acquire geographic data from other sources, such as by accessing geographic databases over the Internet. The management database 310 can also store data remotely, such as across a network such as the Internet. The management database 310 can also store information describing the field devices 330, such as identification information, a description of current or past configuration settings, data acquisition traces, a geographic location of each field device 330, as well as other information describing the collection of data by each of the field devices 330. Each field device 330 can be coupled for communication with a corresponding field database 340. Each field database 340 can store data, such as geographic data, that is collected by their respective field device 330. Each field database 340 can be synchronized by receiving data from the field device manager 300 that was acquired by any of the field devices 330. For example, when a first field device 330a acquires data, such as geodetic data from a GPS satellite or beacon, the first field device 330a transmits the data to the field device manager 300 via the network 320. The first field device 330a also stores the acquired data in a first field database 340a. The field device manager 300 stores the data in the management database 310. The field device manager 300 also transmits the data to each of the other field devices 330b and 330c that did not acquire the data. The field devices 330b and 330c receive the data and store the data in the databases 340b and 340c coupled to its respective field device 330b and 330c. Thus, at this point, each of the field databases 340a, 340b, and 340c and the management database 310 has been synchronized and contain an up-to-date and comprehensive version of the data collected.

Not all of the data stored on the databases need be synchronized. For example, the management database 310 can store data describing the field devices 330 and their settings. This data need not be synchronized with any of the field devices 330. Thus, the field device manager 300 can select particular data to be synchronized, typically including geographic data for a particular geographic area, and manage the synchronization of data, and frequency of synchronization, according to any criteria.

The field device manager 300 can monitor the collection of data and configuration settings of each of the field devices 330. The field device manager 300 can troubleshoot and analyze the collection data by each of the field devices 330 and reconfigure each of the field devices 330. The field device manager 300 can also prevent changes to the settings of the field devices 330 by a user of the field devices 330.

Referring to Figure 4, a system for managing a field device 400 is illustrated. The system can include a manager 410 (e.g. including a computer), a network 405, and a field device 400. The field device 400 can include a GPS, or DGPS. The field device 400 can communicate via a communications link to a wireless device 415, such as a cell phone, for communicating with the Internet 420 and for receiving DGPS services 425. The field device 400 can also receive signals from a satellite 430 for acquiring GPS signals to determine a geographic position. The field device 400 can record data describing a geographic position of the field device in memory within the field device 400. The field device 400 can include a user interface 435, such as a touch screen, and a display for displaying geographic data to a user.

The field device 400 can communicate with additional devices for acquiring or refining geographic data. For example, the field device 400 can communicate via a wireless connection, such as a Bluetooth connection, with an offset device 440 and a beacon 445 to acquire more accurate geographic data. Additional devices, such as an optional external antenna 450, can be coupled to the field device 400 to extend the range of communication with the GPS satellite 430, for use in overgrown environments. It should be appreciated that the field device 400 will typically receive signals from multiple GPS satellites 430.

The network 405 can include wired and/or wireless communication links, such as a USB, WiFi, Bluetooth or other link. The network 405 can also include the Internet. The field device manager 410 can include management software in the form of computer executable instructions stored in memory. When executed, the software can control settings of the field device 400, such as data collection settings and parameters by which the field device 400 receives GPS signals from the GPS satellite 430.

Management software executed at the field device manager 410 can also control distribution of data to, and between, multiple field devices 400. For example, the field device manager 410 can synchronize data stored at multiple field devices 400 by distributing collected data received from one of the field devices to any of the other field devices. The management software can also control reception of data from remote devices.

The field device manager 410 can include a user input device, such as a keyboard 455 and mouse 460, for receiving input from a user. The field device manager 410 can also include a display screen 465 for displaying information, such as data collected, graphical geographic data, configuration settings of the field devices, and options and suggestions for changing the configuration settings of the field devices 400.

Field device manager embodiments and field device embodiments disclosed herein can also include computer-readable media for carrying or having computer-executable instructions or data structures stored thereon. Such computer-readable media can be any available media that can be accessed by a general purpose or special purpose computer or a processor of a field device. By way of example, and not limitation, such computer-readable media can include RAM, ROM, EEPROM, CD-ROM or other optical disk storage, magnetic disk storage or other magnetic storage devices, millipede and other Micro Electro-Mechanical Systems (MEMS), or any other device or medium which can be used to carry or store desired program code means in the form of computer-executable instructions or data structures and which can be accessed by a general purpose or special purpose computer, or a processor within a field device. When information is transferred or provided over a network or another communications connection (either hardwired, wireless, or a combination of hardwired or wireless) to the field device manager or a field device, the connection is properly viewed as a computer-readable medium. Thus, any such connection is properly termed a computer-readable medium. Combinations of the above should also be included within the scope of computer-readable media. Computer-executable instructions comprise, for example, instructions and data which cause a processing device to perform a certain function or group of functions.

Although not required, several embodiments have been described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the embodiments illustrated herein may be practiced in network computing environments with many configurations, including personal computers, handheld devices, surveying devices, multi-processor systems, portable GPS devices, microprocessor-based devices, programmable consumer electronics, network PCs, minicomputers, mainframe computers, and the like. Several embodiments may also be practiced in distributed environments where tasks are performed by local and remote processing devices (e.g. field and field device managers) that are linked (either by hardwired links, wireless links, or by a combination of hardwired and wireless links) through a communications network. In a distributed environment, program modules may be located in both local and remote memory storage devices. Multiple field device managers can also be implemented and can communicate directly or across a network.

The field device manager 410 can implement various commercially available and special purpose software packages for performing various functions. For example, the field device manager 410 can include commercial software such as ESRI Arc GIS software for performing GIS analysis. In addition, the field device manager 410 can also include special purpose software such as that disclosed herein for configuring and synchronizing the field device 400. The field device manager 410 can also implement other GIS and graphical software such as ESRI Shape/GeoDB, Bently Microstation, Autodesk AutoCAD, MapInfo, Intergraph Oracle Spatial, and GML (geographic mark-up language) in addition to the special purpose software to provide its various functions and features and in addition to the functions and features disclosed herein.

Similarly, the field device 400 can implement standalone field software or a combination of standalone field software for GPS receiver control along with commercially available field application software such as ESRI ArcPad field software. Receiver controls of the field device, such as software and hardware for performing the functions disclosed herein, can provide full GPS control of the field device functions and settings. The receiver controls can also provide the ability to interface with wireless devices such as global system for mobile (GSM) communications, cellular, and radio devices. The receiver controls can also provide a wide area augmentation system (WAAS), a European geostationary navigation overlay system (EGNOS), and surface assimilation systems (MSAS and RSAS) geo-stationary satellite corrections. The receiver controls can include National Marine Electronics Association (NMEA) standard inputs and outputs for interfacing with reference stations and other devices. The receiver controls can also include functions for updating firmware. The field device can communicate with other field devices, such as a personal digital assistant (PDA) or a portable computer, such as a tablet PC or laptop.

The field device software can include a software extension to conventional GIS software. The extension can add functionality, such as full GPS control of field device functions and settings, ability to interface with wireless devices such as GSM, cellular, and radio devices, log static data for post-processed sub-meter or centimeter accuracy, WAAS, EGNOS, and MSAS geo-stationary satellite corrections, NMEA input and output for interfacing with reference stations and other devices, and functions for updating firmware. This functionality of the extension can allow a true GIS data model in the field for GIS data collection.

The extension can allow preparation of data collection jobs in the office before the data is collected in the field. Thus, a manager can pre-configure GPS and software settings, attach vector data to data collection jobs created for updates or for reference, attach background imagery, and create data collection forms to speed field work. The extension can allow data transfer to and from field devices with advanced synchronization. The extension can also enable post-processing, quality check, and edits to collected data. The extension can merge data directly into enterprise databases and export data to in-common geospatial data formats. A standalone software version can also be implemented that includes any of these features.

The field device software can include a software development kit (SDK). The development kit can include a set of COM objects for all GPS controls available in the software for system integrators to build custom applications. The SDK can give full control over the field device hardware functions and settings and provide the ability to interface with GSM, cellular, radio and offset devices, log static data for post-processed sub-meter or centimeter accuracy, WAAS, EGNOS, and MSAS geo-stationary satellite corrections. NMEA input and output can be provided for interfacing with reference stations and other devices. The field software can further include functions for updating firmware, and for enabling coordinate system conversion from WGS84 to local.

The field device software disclosed herein has many useful elements. For example, the software can provide time and cost efficient workflow for the GIS market, extensive data collection capabilities, and can support customized forms. The software can also provide the ability to interface with GSM, cellular, and radio devices, and to log static data for post-processed sub-meter or centimeter accuracy. The software can allow wireless, bidirectional exchange of data with a centralized computer and collection of federal geographic data committee compliant metadata. Further, the software can support display of sophisticated symbology, geometry, and images in both the field and office.

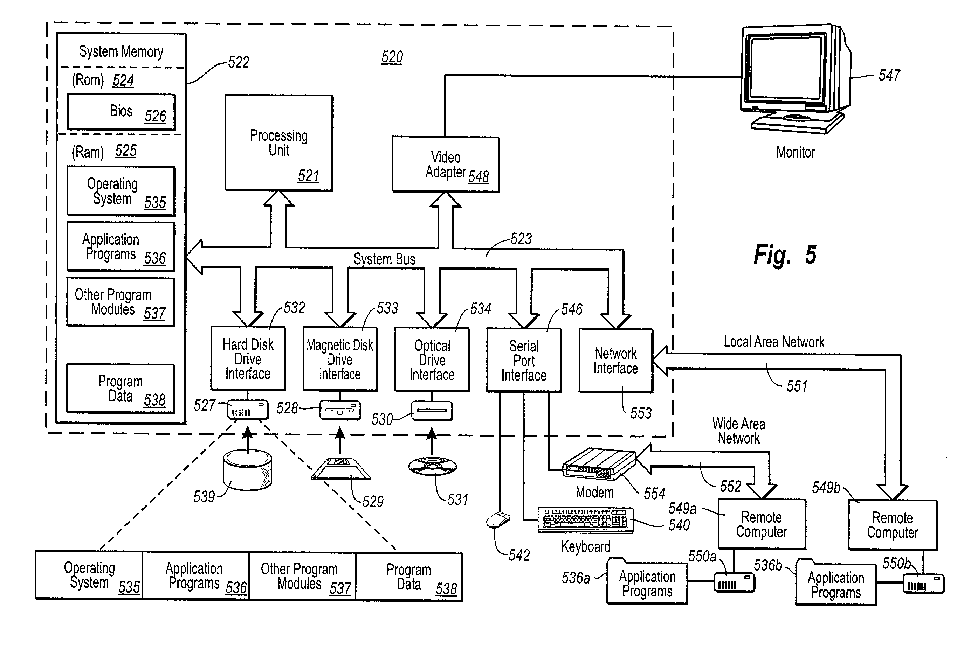

With reference to Figure 5, an example of a field device management system for implementing several embodiments includes a general purpose computing device in the form of a conventional computer 520, including a processing unit 521, a system memory 522, and a system bus 523 that couples various system components including the system memory 522 to the processing unit 521. The system bus 523 may be any of several types of bus structures including a memory bus or memory controller, a peripheral bus, and a local bus using any of a variety of bus architectures. The system memory includes read only memory (ROM) 524 and random access memory (RAM) 525. A basic input/output system (BIOS) 526, containing the basic routines that help transfer information between elements within the computer 520, such as during start-up, may be stored in ROM 524.

The computer 520 may also include a magnetic hard disk drive 527 for reading from and writing to a magnetic hard disk 539, a magnetic disk drive 528 for reading from or writing to a removable magnetic disk 529, and an optical disk drive 530 for reading from or writing to removable optical disk 531 such as a CD-ROM or other optical media. The magnetic hard disk drive 527, magnetic disk drive 528, and optical disk drive 530 are connected to the system bus 523 by a hard disk drive interface 532, a magnetic disk drive-interface 533, and an optical drive interface 534, respectively. The drives and their associated computer-readable media provide nonvolatile storage of computer-executable instructions, data structures, program modules and other data for the computer 520. Although the exemplary environment described herein employs a magnetic hard disk 539, a removable magnetic disk 529 and a removable optical disk 531, other types of computer readable media for storing data can be used, including magnetic cassettes, flash memory cards, digital versatile disks, Bernoulli cartridges, RAMs, ROMs, and the like.

Program code means comprising one or more field device management program modules may be stored on the hard disk 539, magnetic disk 529, optical disk 531, ROM 524 or RAM 525, including an operating system 535, one or more application programs 536, other program modules 537, and program data 538. A user may enter commands and information into the computer 520 through keyboard 540, pointing device 542, or other input devices (not shown), such as a microphone, joy stick, game pad, satellite dish, scanner, wireless device, or the like. These and other input devices are often connected to the processing unit 521 through a serial port interface 546 coupled to system bus 523. Alternatively, the input devices may be connected by other interfaces, such as a parallel port, a game port or a universal serial bus (USB). A monitor 547 or another display device is also connected to system bus 523 via an interface, such as video adapter 548. In addition to the monitor, personal computers typically include other peripheral output devices (not shown), such as speakers and printers.

The computer 520 may operate in a networked environment using logical connections to one or more remote computers, such as remote computers 549a and 549b, and field devices. Remote computers 549a and 549b may each be another personal computer, a server, a router, a network PC, a peer device, a field device, or other network node, and can typically include any or all of the elements described above relative to the computer 520, although only memory storage devices 550a and 550b and their associated application programs 536a and 536b have been illustrated in Figure 5. The logical connections depicted in Figure 5 include a local area network (LAN) 551 and a wide area network (WAN) 552 that are presented here by way of example and not limitation. Such networking environments are commonplace in office-wide or enterprise-wide computer networks, intranets and the Internet.

When used in a LAN networking environment, the computer 520 is connected to the local network 551 through a network interface or adapter 553. When used in a WAN networking environment, the computer 520 may include a modem 554, a wireless link, or other means for establishing communications over the wide area network 552, such as the Internet. The modem 554, which may be internal or external, is connected to the system bus 523 via the serial port interface 546. In a networked environment, program modules depicted relative to the computer 520, or portions thereof, may be stored in the remote memory storage device. It will be appreciated that the network connections shown are exemplary and other means of establishing communications over wide area network 552 for streaming GIS data may be used.

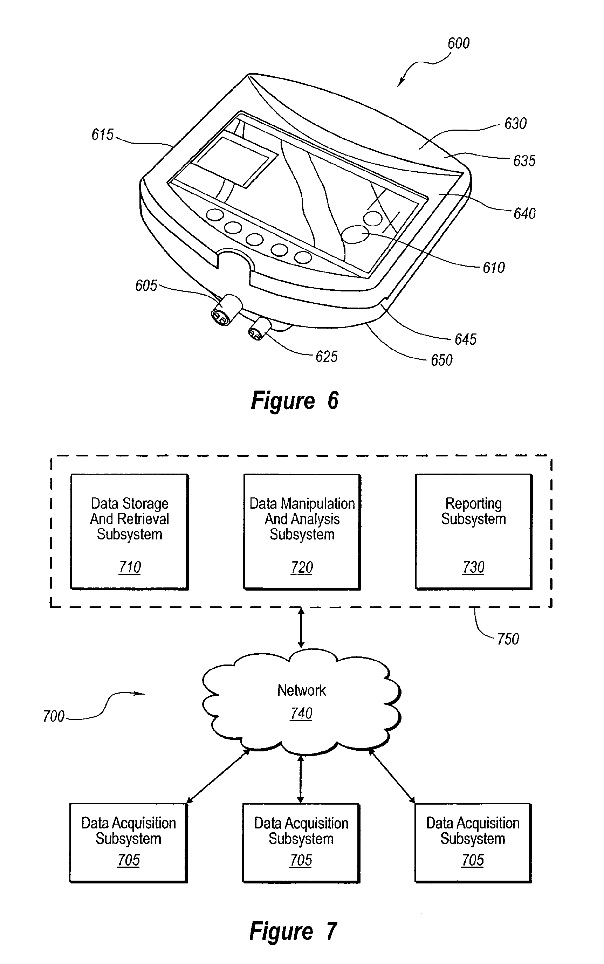

Referring to Figure 6, an example of a field device 600 is illustrated. The field device 600 can include a color touch screen display 610 for displaying geographic information and for receiving input from a user. The type of display can be selected such that it is readable in sunlight conditions in the field. The screen size can be optimized for mobile GIS and data collection. The display can support raster background images overlaid with multiple vector layers while in the field.

The field device 600 can include a processor 615 implementing an industry standard operating system, such as Microsoft's Windows Mobile operating system. The field device 600 can also run special purpose software for implementing the functions disclosed herein either alone or in combination with commercially available software. The field device 600 can be customizable using a software development kit (SDK) to allow creation of applications for the particular software package, data collection, software framework, hardware platform, computer system, or operating system.

The field device can include a port 605. The port 605 can be selected and configured for harsh environments and high signal integrity, such as a LEMO port. The port 605 can receive external power for extended operation. The port 605 can also include a USB port for high speed data transfer. The port 605 can also include a RS232 port for legacy device support (such as radios and DGPS decoders).

The field device 600 can include an external antenna port 625, such as a TNC antenna port. The external antenna port 625 can connect to an external antenna, such as for vehicular applications. The antenna port 625 can also be used to connect to a survey-grade antenna to increase accuracy and tracking performance under dense foliage or comparable conditions. The field device 600 can also include an integrated antenna/receiver 630. The integrated antenna/receiver 630 can be a 12-channel L1 GPS antenna/receiver. The integrated antenna/receiver 630 can enable sub-meter real-time accuracy with SBAS or DGPS options. Post processing can enable centimeter-level capability.

The field device 600 can include Integrated WiFi transmitter/receiver 635 to access Internet, data servers, or link to a field device manager, or other office computer, while in a hotspot. The field device 600 can include integrated Bluetooth wireless link 640 to communicate with offset devices, beacon receivers, barcode scanners, and mobile phones to access DGPS services, the Internet, and data servers. The field device can include a reader 645 for a removable data storage medium. For example, the removable data storage medium can be a compact flash (CF) card storing several gigabytes of data. The field device 600 can house a field-replaceable and rechargeable battery 650, which can allow the field device to operate for extended time periods, such as an entire day.

The field device manager and field devices can represent at least a portion of a GIS. A GIS can be described in terms of several subsystems for performing specific functions of the GIS. These subsystems and their functions can be further broken down into additional subsystems, modules, or devices for performing the disclosed, and additional, functions, steps, and acts. Moreover, multiple functions, steps, and acts can be performed by a single subsystem, module, or device. For example, referring to Figure 7, a block diagram is shown illustrating various subsystems of a GIS 700 according to an example embodiment. The GIS can comprise data acquisition subsystems 705, data storage and retrieval subsystem 710, a data manipulation and analysis subsystem 720, and a reporting subsystem 730. Any of these subsystems can be combined into a particular single assembly or device for accomplishing the described functions. Further, any of the subsystems described herein can be in communication with any of the other subsystems described herein. The particular embodiments described are for illustration of several aspects of example embodiments.

The data acquisition subsystems 705 can collect and perform preprocessing of the spatial data received form various sources and input devices. The data acquisition subsystems 705 can be responsible for transformation of different types of spatial data, for example from isoline symbols on a topographic map to point elevations inside the GIS. The data storage and retrieval subsystem 710 can organize the spatial data in a manner that allows for efficient storage, retrieval, updating, and editing. Additional information such as attribute and metadata information can also be stored. The data manipulation and analysis subsystem 720 can perform analyses of the data received, such as performing tasks on the data, performing aggregates and disaggregates, estimating parameters and constraints, and performing modeling functions. The reporting subsystem 730 can display the spatial data, and display results of any analysis conducted, in tabular, graphics, or map formats. The reporting subsystem can also display settings of the data acquisition subsystems 700. The GIS illustrated in Figure 7 can be used to carry out several aspects of several embodiments illustrated herein. Communication between any of the subsystems can occur across a network 740 (e.g. a LAN, a WAN, or the Internet). For example, as illustrated in Figure 7, the data storage and retrieval subsystem 710, the data manipulation and analysis subsystem 720, and the reporting subsystems can communicate with the data acquisition subsystems 700 across a network 740.

The different subsystems can be embodied by different apparatuses. For example, the data storage and retrieval subsystem 710, the data manipulation and analysis subsystem 720, and the reporting subsystem 730 can be embodied by a conventional, or special purpose computer 750. For example, the data storage and retrieval subsystem 710, the data manipulation and analysis subsystem 720, and the reporting subsystem 730 can be embodied by the computer system illustrated in Figure 5 including software for performing the described functions. Each of the data storage and retrieval subsystem 710, the data manipulation and analysis subsystem 720, and the reporting subsystem 730 can be embodied by a module stored on computer readable media for execution using the computer system illustrated in Figure 5. The computer system 750 can provide communication of data and instructions between the various modules representing the subsystems within the computer.

Each of the data acquisition subsystems 705 illustrated in Figure 7 can be embodied as a field device, such as the field device illustrated in Figure 6. The data acquisition subsystems 700 can also perform some of the functions of the subsystems of the computer 750. For example, conversion of data type and protocol, a certain level of data analysis, and a certain level of reporting to a field user can be performed at the data acquisition subsystems 700. In addition, a certain level of data storage, which can be synchronized with data storage at other data acquisition subsystems 700, can be accomplished at any of the data acquisition subsystems 700 as discussed above. Accordingly, the GIS illustrated in Figure 7 is for illustrative purposes only. Thus, various subsystems making up a GIS can be embodied by the systems illustrated herein.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A system for collecting geographic data, the system comprising:
- a field device manager comprising:
• a management network interface;
• a management data processing device configured to transmit a configuration instruction to the network interface;
- a network; and
- a field device comprising:
• a global positioning device configured to collect geographical data related to a geographic location;
• a field network interface configured to receive the configuration instruction from the network; and
• a field data processor configured to change a configuration setting for the collection of geographical data based on the configuration instruction received.

2. A system according to claim 1, wherein the network further comprises:
a wireless connection for transmitting the configuration instruction.

3. A system according to claim 2, wherein the wireless connection includes at least one member of the following set:
• a cellular connection;
• a Wi-Fi connection;
• a connection compliant with IEEE 801.11 standard;
• a Bluetooth connection;
• a radio connection; or
• an infrared connection.

4. A system according to one of the preceding claims, wherein the global positioning device is part of a differential global positioning system.

5. A system according to one of the preceding claims, wherein the configuration instruction includes at least one member of the following set:
• a minimum number of satellites information;
• maximum accuracy information;
• maximum track information;
• hyper track mode information;
• antenna type settings;
• post processing instructions
• static and moving observations;
• positional update rate;
• time, data transfer, and almanac data;
• satellite based augmentation instructions;
• beacon settings;
• software configurations; or
• an instruction that limits or prevents a change to a configuration setting by a user of the field device.

6. A system according to one of the preceding claims, wherein the field device manager is configured to transmit configuration instructions to multiple field devices via the network.

7. A system according to claim 6, wherein the field device manager includes a display and is configured to display configuration settings of each of the multiple field devices on the display.

8. A method for remotely managing a field device, the method comprising:
- receiving data from the field device describing current settings by which the field device is collecting geographic data;
- transmitting configuration instructions to the field device to reconfigure the manner in which the field device collects data.

9. A method according to claim 8, wherein the configuration instructions include one of the members of the following set:
• a minimum number of satellites information;
• maximum accuracy information;
• maximum track information;
• hyper track mode information;
• antenna type settings;
• post processing instructions;
• static and moving observations;
• positional update rate;
• time, data transfer, and almanac data;
• satellite based augmentation instructions;
• beacon settings;
• software configurations; or
• an instruction that limits or prevents a change to a configuration setting by a user of the field device.

10. A method according to claim 8 or 9, further comprising:
- receiving data collected by the field device, the data including data describing a geographic position;
- comparing the data received from the field device with data stored locally; and
- storing the data received from the field device with the data stored locally.

11. A method according to one of claims 8, 9 or 10, further comprising:
- displaying configuration settings of the field device on a display of a field device manager; and
- troubleshooting the collection of data by the field device; and transmitting information describing changes to configuration settings to the field device.

12. A method of communication between a field device and a field device manager, the method comprising:
- transmitting information to a network, the information describing a current configuration setting that defines a setting by which the field device collects data;
- receiving instructions from the network describing a change to the configuration setting; and
- changing the current configuration setting of the field device.

13. A method according to claim 12, wherein transmitting the information to the network includes transmitting the information to the Internet.

14. A method according to claim 12 or 13, wherein the instructions describe one of the members of the following set:
• a minimum number of satellites instruction;
• maximum accuracy instruction;
• maximum track instruction;
• hyper track mode instruction;
• antenna type settings instruction;
• post processing instructions;
• static and moving observation instruction;
• positional update rate instruction;
• time, data transfer, and almanac data;
• satellite based augmentation instruction;
• beacon settings instruction;
• software configuration instruction; and
• an instruction that limits or prevents a change to a configuration setting by a user of the field device.

15. A method according to one of the claims 12 to 14, wherein the configuration setting defines a setting by which the field device collects global positioning data from global positioning satellites.

16. A method according to one of the claims 12 to 15, further comprising:
- receiving geographic data from the network, where the geographic data was acquired by a different field device.

17. A computer readable medium having computer-executable instructions for performing the method of one of the claims 8 to 16.
